# EUROPÄISCHE PATENTSCHRIFT

(11) **EP 2 909 388 B1**
(45) Veröffentlichungstag und Bekanntmachung des Hinweises auf die Patenterteilung: **25.03.2020**
(21) Anmeldenummer: 13782970.1
(22) Anmeldetag: 18.10.2013
(51) Int. Cl.: E04B 1/78, E04C 2/16, E04C 2/296, E04B 1/74

(54) **TRAGFÄHIGES UND WÄRME DÄMMENDES BAUELEMENT AUS DER BLATTMASSE VON TYPHA**
LOAD-BEARING AND HEAT-INSULATING STRUCTURAL ELEMENT MADE OF TYPHA LEAF MASS
ÉLÉMENT DE CONSTRUCTION RÉSISTANT À LA CHARGE ET THERMIQUEMENT ISOLANT SE COMPOSANT DE MASSE FOLIAIRE DE TYPHA

(30) Priorität: 18.10.2012 DE 102012219060
(43) Veröffentlichungstag der Anmeldung: 26.08.2015
(73) Patentinhaber: Fraunhofer-Gesellschaft zur Förderung der angewandten Forschung e.V., 80686 München (DE)
(72) Erfinder: THEUERKORN, Werner, 84389 Postmünster (DE)
(86) Internationale Anmeldenummer: PCT/EP2013/003148
(87) Internationale Veröffentlichungsnummer: WO 2014/060114

(56) Entgegenhaltungen:
- WO-A1-2012/107055
- DE-A1- 19 610 247
- DE-A1- 19 757 418

## Beschreibung

Die Anmeldung betrifft ein tragfähiges und Wärme dämmendes Bauelement aus der Blattmasse von Typha. Aus der DE 197 57 418 B4 ist ein Dämm-, Füll- oder Packstoff bekannt. Dieser enthält Blattmasse aus Typha, deren Aerenchym weitgehend erhalten ist. Dabei werden die Blätter in Längsrichtung durchtrennt. Es ist angegeben, dass Blattteile mit einer Länge von max. 15 cm, vorzugsweise 2 bis 6 cm eingesetzt werden. Die Partikel werden unter hohem Druck von mehr 1 bar nach Leimzugabe verpresst.

In einer Ausführungsform der DE 197 57 418 B4 werden in ein U-förmiges Gestell mit Sorelzementkleber beleimte untere Drittel der Rohrkolbenblattmasse als Blattbündel mit einer Länge von 60 cm parallel eingelegt. Dabei wird ein 2 m breites, 1,20 m hohes und 60 cm tiefes Paket erzeugt. Sodann werden die Blätter komprimiert und dabei verklebt. Die Kompression erfolgt so moderat, dass im Wesentlichen nur die Zwischenräume zwischen den Blättern verschwinden, während das Aerenchymvolumen nicht wesentlich verkleinert wird. Das Paket wird sodann ausgehärtet. Senkrecht zu den Blattachsen werden danach Platten mit einer Stärke von etwa 7 cm ausgeschnitten. Somit werden Platten erhalten, in denen die Blätter längs der Dicke der Platten verlaufen. Diese Platten dienen als Kernschicht für Sandwich Elemente, welche Deckschichten aufweisen müssen. Die Deckschichten werden aus dem oberen Blattdrittel von Typhablattpflanzen gewonnen. Dazu werden etwa 2,5 mm breite Längsstreifen geschnitten, aus denen dann etwa 10 cm lange Stücke geschnitten werden. Das Gemenge der Blattstreifen wird mit einer Dornenwalze zu einem etwa 4 cm hohen Vlies ausgeworfen, mit Warmluft vorgetrocknet und dann zu Platten mit einer Stärke von etwa 3 mm gepresst.

Aus der EP 2 295 659 A2 ist ein Wärmedämmelement auf der Basis von Typhablattmasse bekannt. Dabei werden die Partikel sehr stark in Mühlen zerkleinert, sodass Partikel in Dimensionen von zehntel Millimeter bis mehreren Millimetern erzeugt werden. Auf diese Weise wird die Blattstruktur zerstört, bevor das Material mit Bindemitteln versetzt und zu Körpern verpresst wird. Die geschilderten Wärmedämmelemente besitzen gute Eigenschaften hinsichtlich Dämmvermögen und sind in sich formstabil, besitzen aber keine nennenswerte Tragfähigkeit.

Aus der WO 2012/107055 ist ein bindemittelarmer Formkörper auf Basis von 90 bis 100 Gewichtsprozent Typha-Blattfasern mit großer Oberflächenglattheit und ausgezeichneten mechanischen Eigenschaften bekannt. Dazu werden Typha-Blattfasern erst quer zu ihrer Längsrichtung geschnitten und anschließend in einer Mühle oder einem Zerspaner zerkleinert.

Im Rahmen der vorliegenden Anmeldung gilt es, eine deutlich verbesserte Kombination aus Wärmedämmung und Tragfähigkeit, zwei sich häufig widersprechenden Zielen, zu erreichen. Die Lösung dieser Aufgabe findet sich im unabhängigen Anspruch. Die abhängigen Ansprüche geben vorteilhafte Weiterbildungen an. Weitere Details finden sich in der Beschreibung und den Zeichnungen.

Dem obengenannten Widerspruch von Wärmedämmung und Tragfähigkeit wird dadurch begegnet, dass man die sehr spezielle Blattstruktur von Typha in besonderer Weise einsetzt. Vorgeschlagen wird hierzu ein Bauelement mit einer Dicke und einer flächigen Erstreckung. In vielen Fällen handelt es sich um eine ebene Platte. Dies muss aber nicht zwingend der Fall sein.

Zunächst soll die Erfindung jedoch aus Gründen einer verständlichen Darstellung anhand einer ebenen Platte erläutert werden. Die Typha-Blätter werden längs geschnittenen und auf geeignete Längen gekürzt. Es handelt sich im Regelfall um den oberirdischen Teil der Typha-Blätter. Durch das Längsschneiden und Kürzen auf geeignete Länge ergeben sich stabförmig vorliegende Typha-Blattpartikel, bei denen die Länge ein Vielfaches von deren Dicke beträgt. Aus diesen stabförmigen Typha-Blattpartikeln ist die Platte aufgebaut. Dies soll aber nicht ausschließen, dass andere Komponenten und Partikel enthalten sein können. Die stabförmigen Typha-Blattpartikel sind beim erfindungsgemäßen Bauelement in der Plattenebene angeordnet. Durch diese ebene Ausrichtung ist es leichter möglich, die stabförmigen Typha-Blattpartikel miteinander zu verkleben. Im Stand der Technik werden Typha-Blattpartikel häufig regellos verarbeitet. Wenngleich damit sicherlich viele Typha-Blattpartikel in einer Ebene liegen, so liegt im Stand der Technik doch eine nicht zu vernachlässigende Menge von Typha-Blattpartikeln in einem Winkel zur Plattenebene. Dies erschwert das Verkleben der Typha-Blattpartikel. Ein wesentlicher Aspekt der Erfindung ist aber, dass das Verkleben erleichtert wird, so dass abgesehen von einzelnen Ausreißern nur stabförmige Typha-Blattpartikel in einer Ebene toleriert werden können. Ergänzend wird darauf hingewiesen, dass es möglich sein kann, dass nicht alle stabförmigen Typha-Blattpartikel untereinander verklebt sind, etwa bei Fehlern im Herstellungsprozess. Wegen des erleichterten Verklebens kann ein vergleichsweise schwacher Kleber eingesetzt werden. Bevorzugt ist hierbei ein mineralischer Kleber. Bei Verwendung eines mineralischen Klebers, der keine nennenswerten nichtmineralischen Zusätze enthält, kann das Bauelement nach seiner Benutzung kompostiert werden. Dies ist ökologisch vorteilhaft und führt zu einem auch wirtschaftlich interessanten niedrigen Entsorgungsaufwand. Darüber hinaus kann auch Belangen des Brandschutzes Rechnung getragen werden. Kommt etwa ein Magnesitkleber zum Einsatz, so wird ein im Hinblick auf den Einsatz im Baubereich schwer brennbares Bauelement bereitgestellt.

Die hohe Tragfähigkeit des Bauelements rührt daher, dass die stabförmigen Typha-Blattpartikel in Längsrichtung eine hohe Steifigkeit aufweisen, aber in Querrichtung mit geringen Drücken elastisch verformbar sind. Durch die Ausrichtung in einer Ebene werden weitgehend auch die freien Lufträume zwischen den stabförmigen Typha-Blattpartikeln vermieden. Damit verbessert sich die Wärmedämmung des Bauelements. Hinzu kommt, dass quer zur Längsrichtung der stabförmigen Typha-Blattpartikel die Wärmeleitfähigkeit geringer ist. In genau dieser Richtung ist aber die Wärmedämmung gefordert. Bei einem plattenförmigen Wärmedämmelement geht es in aller Regel darum die Wärmeleitung von einer Seite der Platte zur anderen Seite der Platte zu reduzieren. Die Wärmeleitung in Plattenebene ist meist von untergeordneter Bedeutung.

Soweit im Stand der Technik eine parallele Anordnung der Blattpartikel erwähnt ist, wie in der eingangs erwähnten Ausführungsform der DE 197 57 418 B4, so verlaufen die Blattpartikel im Regelfall in Richtung der Dicke der Plattenebene. Damit werden nicht die oben beschriebenen Vorteile erreicht wie bei einer Ausrichtung senkrecht zur Dicke der Platte.

Insbesondere aber werden Gebilde mit einer parallelen Anordnung der Blattpartikel nicht als eigenständige Bauelemente ausgebildet, sondern müssen mit Deckschichten versehen werden. Erst die vorliegende Erfindung gestattet Bauelemente bei denen keine Deckschichten zur Stabilisierung erforderlich sind.

Ausgehend von den oben beschrieben ebenen Platten wird leicht verständlich, dass es sich nicht zwingend um Platten handeln muss. So können etwa für runde Abschnitte einer Wand gleichsam gebogene Platten verwendet werden. Dieses Bild der gebogenen Platten soll nur anschaulich machen, dass anstelle der oben geschilderten ebenen Platten auch Bauelemente eingesetzt werden können, die nur in einer Richtung gerade und in der anderen Richtung gebogen sind. Dies gilt insbesondere dann, wenn ein nennenswerter Anteil der stabförmigen Typha-Blattpartikel in der geraden Richtung ausgerichtet ist. Eine gewisse Abweichung von der geraden Richtung kann dabei selbstverständlich hingenommen werden.

Es ist aber auch möglich, dass in beiden Richtungen der flächigen Erstreckung eine Krümmung vorliegt. Eine Anwendung für derartige Bauelemente wäre etwa der Bau einer Kuppel. Hier werden in zwei Richtungen der flächigen Erstreckung gekrümmte Bauelemente benötigt. Freilich darf die Krümmung in der Richtung, in der die stabförmigen Typha-Blattpartikel verlaufen, ein gewisses Maß nicht überschreiten, da ansonsten nicht mehr von der hohen Stabilität der stabförmigen Typha-Blattpartikel in Längsrichtung profitiert werden kann.

Bei all den genannten Ausführungsformen - ebene Platte, also in allen Richtungen der flächigen Erstreckung gerade, nur in einer Richtung gerade, etwa ein Teil eines Zylinders, oder in beiden Richtungen gekrümmt, wie beim Teil einer Kuppel - sind die stabförmigen Typha-Blattpartikel senkrecht zur Dicke des Bauelements ausgerichtet. Genau genommen, sind sie senkrecht zu der Strecke angeordnet, längs derer die Dicke jeweils gemessen wird. Dies ist jeweils längs des kürzesten Wegs von einer Seite der flächigen Erstreckung zur anderen Seite. Dies soll hier mit "senkrecht zur Dicke" knapp ausgedrückt werden. Es versteht sich, dass unter senkrecht zur Dicke nicht nur ein exakt rechter Winkel zu verstehen ist. Wichtig ist den Winkel so einzuhalten, dass die oben geschilderten Effekte und Vorteile erreicht werden.

Bei dem Bauelement kann es sich auch um ziegelförmige Elemente handeln, die ebenfalls aus stabförmigen Typha-Blattpartikeln aufgebaut sind, die zumindest in einer Ebene ausgerichtet sind. Die ziegelförmigen Elemente sind, wie leicht ersichtlich, im Grunde nichts anderes als plattenförmige Elemente, die etwas dicker und in flächiger Richtung kleiner geraten sind. Es ist darauf zu achten, dass bei Ziegeln die Typha-Blattpartikel so angeordnet sind, dass bei in einer Wand eingebauten Ziegeln die Last in Richtung der Typha-Blattpartikel verläuft. Insofern ist bei Ziegeln unter der Dicke eine Erstreckung zu verstehen ist, die beim eingebauten Ziegel horizontal verläuft. Dies kann von der oben genannten Definition der Dicke abweichen. Damit können die Typha-Blattpartikel vertikal verlaufen und entsprechend die Lasten aufnehmen

Mit der Erfindung erhält man also Wärmedämmplatten, aus denen auch Bauelemente gefertigt werden können, die ein entscheidendes Maß an Tragfähigkeit übernehmen. Freilich können diese Bauelemente auch bei bereits tragenden Konstruktionen eingesetzt werden, z.B. als Innendämmung.

In einer bevorzugten Ausführungsform der Erfindung sind die stabförmigen Typha-Blattpartikel parallel angeordnet. Bei einer parallelen Anordnung kann die Verklebung besonders gut erfolgen, da die geordnet benachbart liegenden stabförmigen Typha-Blattpartikel schon bei vergleichsweise niedrigem Druck eine große Kontaktfläche aufweisen. Es ist damit auch wenig Luft im Bereich zwischen den stabförmigen Typha-Blattpartikeln. Dies führt zu einer niedrigen Wärmeleitfähigkeit quer zu den stabförmigen Typha-Blattpartikeln. In Längsrichtung führen die vielen nebeneinanderliegenden stabförmigen Typha-Blattpartikel zu einer hohen Tragfähigkeit. Für eine gute Wärmedämmung bei hoher Tragfähigkeit in Längsrichtung kann mit dieser Ausführungsform mit einem niedrigen Gewicht, einem niedrigen Bedarf an Typhablattmasse und Kleber ein sehr geeignetes Bauelement geschaffen werden, das sehr hohe Lasten aufnehmen kann.

In einer Ausführungsform sind die stabförmigen Typha-Blattpartikel mit einem Druck in Richtung der Dicke, also senkrecht zu den stabförmigen Typha-Blattpartikeln, aneinander gedrückt, wobei der Druck so gewählt ist, dass eine möglichst vollflächige Verklebung der stabförmigen Typha-Blattpartikel gewährleistet wird und unerwünschte freie Lufträume zwischen den stabförmigen Typha-Blattpartikeln vermieden werden, und zugleich das Schwammgewebe und/oder Stützgewebe der stabförmigen Typha-Blattpartikel im Wesentlichen erhalten bleiben. Diese Wahl des Drucks führt zu einer guten Verklebung und damit zu hoher Stabilität. Ferner werden damit Luftpolster vermieden, die die Wärmedämmung verschlechtern. Wichtig ist aber auch den Druck nicht zu hoch zu wählen, da bei einer nennenswerten Beschädigung des Schwammgewebes und/oder des Stützgewebes die Wärmedämmung und/oder die Tragfähigkeit verschlechtert würden. Dieser Druck ist abhängig vom jeweiligen Bauelement. Wenn etwa die stabförmigen Typha-Blattpartikel parallel angeordnet sind, ist ein eher niedrigerer Druck zu wählen als bei einer isotropen Anordnung senkrecht zur Dicke. Dieser Druck ist auch abhängig von den gewünschten Eigenschaften des Bauelements. So kann etwa durch einen höheren Druck die Tragfähigkeit erhöht werden.

Als ein guter Druckbereich im Sinne obiger Ausführungen hat sich ein Druck von etwa 0,1 bar bis etwa 1 bar erwiesen.

Zur Verklebung ist im Regelfall eine Sorelbindung oder eine Zementbindung vorhanden. Als geeignetes Gewichtsverhältnis von Kleber zu den stabförmigen Typha-Blattpartikeln hat sich ein Bereich von 0,5 bis 1,5 erwiesen. Dies ist bei Verwendung mineralischer Kleber, insbesondere wenn keine nennenswerten nichtmineralischen Zusätze vorhanden sind, ein erfreulich niedriges Verhältnis und wird durch die geschilderte Anordnung ermöglicht. Wie bereits erwähnt ist ein Magnesitkleber besonders geeignet.

In einer Ausführungsform ist die Länge der stabförmigen Typha Blattpartikel in Abhängigkeit von der gewünschten Form des Bauelements und/oder der Ausrichtung der stabförmigen Typha-Blattpartikel und/oder der geplanten Anwendung des Bauelements gewählt. Zur Form des Bauelements kann beispielsweise ausgeführt werden, dass die Blattpartikel umso kürzer sein sollten, je stärker das Bauelement in Richtung der stabförmigen Blattpartikel gekrümmt ist. Sind die stabförmigen Typha-Blattpartikel weitgehend parallel zueinander angeordnet, so können diese länger sein, da die Verklebung besser erfolgen kann. Es versteht sich, dass dies umso mehr gilt, je paralleler die Ausrichtung ist. Man kann daher auch von einer Abhängigkeit vom Ausrichtungsgrad sprechen. Auch eine Abhängigkeit von der geplanten Anwendung ist gegeben. So kann mit längeren stabförmigen Typha-Blattpartikeln eine höhere Druck- und Zugfestigkeit erreicht werden. Wenn es also vor allem darum geht, so sollten längere stabförmige Typha-Blattpartikel gewählt werden.

Der mögliche Längenbereich geht von 5 cm bis zur maximal möglichen Länge des Typha Blattes. An dieser Stelle soll ausgeführt werden, dass die stabförmigen Typha-Blattpartikel ursprünglich länger sein können, als das Bauelement. Dies ist der Fall wenn lange stabförmige Typha-Blattpartikel zunächst vorliegen und dann beim Zuschnitt der Bauelemente gekürzt werden. Die Bauelemente können in einer Richtung Geschoßhöhe haben. Damit ist ein schneller Einbau möglich. Der Transport wird freilich erleichtert, wenn die Bauelemente kleiner sind; etwa 50 cm bis 100 cm Seitenlänge sind insbesondere für den Vertrieb in Baumärkten geeignet.

In einer Ausführungsform ist an mindestens einer Seite des Bauelements eine Deckschicht angebracht. Quer zur Richtung der stabförmigen Typha Blätter, also in Richtung der Dicke lässt sich das Bauelement unter Umständen zusammendrücken, da die stabförmigen Typha Blätter in dieser Richtung weniger Kraft aufnehmen können. Dies führt zu der geschilderten guten Verklebbarkeit. Sollte ein verbesserter Schutz der Bauelemente gewünscht sein, kann eine Deckschicht an mindestens einer Seite angebracht werden. Oft ist es sinnvoll an beiden Seiten Deckschichten anzubringen. Mit einer Decksicht können mitunter optische Anforderungen besser erfüllt werden.

Hinzu kommt, dass bei Ausführungen mit parallel angeordneten stabförmigen Typha-Blättern nur begrenzte Querkräfte aufgenommen werden können. Senkrecht zu den stabförmigen Typha-Blättern können ohne Deckschicht Querkräfte nur aufgenommen werden, soweit die Klebkraft ausreicht. Damit können zwar im allgemeinen Querkräfte hinreichend aufgenommen werden. Mit einer geeigneten Deckschicht können aber höhere Querkräfte aufgenommen werden. Dadurch wird eine weitere Verbesserung des Bauelements erreicht. Auch ein Schutz vor seitlicher Beschädigung wird mit der Deckschicht verbessert. Als Deckschicht kommen etwa stärker verpresste Platten aus Typhablattmasse in Betracht, wie sie im Stand der Technik bekannt sind. Diese sind isotrop ausgebildet, so dass die oben genannten Effekte bei der parallelen Ausrichtung der stabförmigen Typha Blätter nicht auftreten. Aber auch viele andere Materialien sind denkbar.

Eine weitere Möglichkeit die Aufnahmefähigkeit für Querkräfte zu verbessern, wird erreicht, wenn in einer ersten Schicht des Bauelements die stabförmigen Typha-Blattpartikel in einer ersten Richtung senkrecht zur Dicke des Bauelements ausgerichtet sind und in mindestens einer weiteren Schicht in einer von der ersten Richtung abweichenden Richtung senkrecht zur Dicke des Bauelements ausgerichtet sind. Bei einer ebenen Platte etwa bietet sich an, in einer ersten Schicht die stabförmigen Typha Blätter längs und in einer weiteren, in der Mitte liegenden, Schicht quer anzuordnen. Dieser mittigen Schicht kann dann schließlich eine dritte Schicht folgen, in der die stabförmigen Typha Blätter längs liegen.

Soweit in der DE 197 57 418 B4 Anordnungen mit mehreren Schichten bekannt sind, ist in einer der Schichten eine regellose Anordnung der Typha-Blattpartikel gegeben. Damit werden nicht die oben genannten Vorteile erreicht.

Da die parallele Anordnung der stabförmigen Typha-Blattpartikel große Vorteile und große Materialeinsparungen mit sich bringt, ist der zusätzliche Fertigungsaufwand für mehrere Schichten hinzunehmen. Im Vergleich zu einer Platte mit einer Schicht, in der die stabförmigen Typha-Blattpartikel nicht parallel angeordnet sind, kann bei gleicher Tragfestigkeit und gleicher Fähigkeit zur Aufnahme von Querkräften Material und Gewicht eingespart werden.

Die Schichten müssen auch nicht gleich dick sein. Bei einer tragenden Wand etwa sind in einer Richtung hohe Kräfte aufzunehmen. In dieser Richtung sollten die meisten stabförmigen Typha Blätter angeordnet sein. In einer senkrechten Richtung dazu treten nur niedrigere Querkräfte auf.

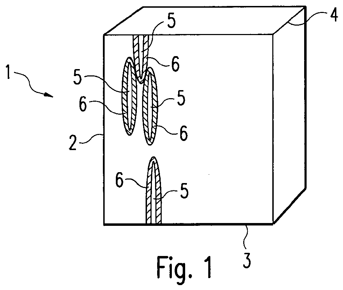

Anhand der Figur 1 soll die Erfindung mit einem Ausführungsbeispiel nachstehend kurz näher erläutert werden. Dabei zeigt Figur 1 sehr schematisch ein als ebene Platte ausgebildetes Bauelement 1. Die ebene Platte 1 weist eine Höhe 2 von etwa 180 cm und eine Breite 3 von etwa 60 cm auf. Die Dicke 4 beträgt etwa 10 cm. Zu erkennen sind die stabförmigen Typha-Blattpartikel 5. In einer realen Platte ist das ganze Plattenvolumen - abgesehen von einer eventuell vorhandenen Deckschicht - mit den stabförmigen Typha-Blattpartikeln 5 ausgefüllt. Im Interesse der Übersichtlichkeit sind nur einzelne gezeigt. Die schraffierten Bereiche sollen anzeigen, dass die stabförmigen Typha-Blattpartikel 5 von Kleber 6 umgeben sind. Der Kleber 6 ist nur ein dünner Film und in der Figur deutlich zu groß gezeigt. Mit diesem Kleber 6 sind die stabförmigen Typha-Blattpartikel 5 untereinander verklebt. Es ist zu erkennen, dass die stabförmigen Typha-Blattpartikel 5 senkrecht zur Dicke 4 angeordnet sind. Die stabförmigen Typha-Blattpartikel 5 liegen parallel zueinander. Sie beginnen und enden in unterschiedlichen Bereichen der Platte 1. Zu erkennen ist, dass durch den Zuschnitt der Platte, welcher bei der Herstellung erfolgt, die stabförmigen Typha-Blattpartikel 5 teilweise durchtrennt werden. Die Platte 1 weist in Längsrichtung, also in Richtung der Höhe 2, eine Druckfestigkeit von etwa 0,5 N/mm auf. Die Wärmeleitung in Richtung der Dicke 4 beträgt etwa 0,040 W/mK.

## Patentansprüche

1. Tragfähiges und Wärme dämmendes Bauelement (1) mit einer Dicke (4) und einer flächigen Erstreckung (2, 3) aufgebaut aus stabförmigen Typha-Blattpartikeln (5), wobei die stabförmigen Typha-Blattpartikel (5) senkrecht zur Dicke (4) des Bauelements (1) ausgerichtet sind und mit einer Verklebung (6) untereinander verbunden sind, bevorzugt mit einer mineralischen Verklebung (6) ohne nennenswerte nichtmineralische Zusätze, derart dass keine Deckschichten zur Stabilisierung des Bauelements erforderlich sind, **dadurch gekennzeichnet, dass** längsgeschnittene Typha-Blätter die stabförmigen Typha-Blattpartikel (5) ergeben.

2. Bauelement nach Anspruch 1, **dadurch gekennzeichnet, dass** mindestens eine Richtung (2, 3) der flächigen Erstreckung gerade ist.

3. Bauelement nach einem der Ansprüche 1 oder 2, **dadurch gekennzeichnet, dass** die stabförmigen Typha-Blattpartikel (5) parallel ausgerichtet sind.

4. Bauelement nach einem der vorhergehenden Ansprüche, **dadurch gekennzeichnet, dass** die stabförmigen Typha-Blattpartikel (5) bei der Herstellung mit einem Druck in Richtung der Dicke (4) aneinander gedrückt sind, wobei der Druck so gewählt ist, dass eine möglichst vollflächige Verklebung (6) der stabförmigen Typha-Blattpartikel (5) gewährleistet ist und unerwünschte freie Lufträume zwischen den stabförmigen Typha-Blattpartikeln (5) vermieden werden, und zugleich das Schwammgewebe und/oder Stützgewebe der stabförmigen Typha-Blattpartikel (5) im Wesentlichen erhalten bleiben.

5. Bauelement nach einem der vorhergehenden Ansprüche, **dadurch gekennzeichnet, dass** die stabförmigen Typha-Blattpartikel (5) bei der Herstellung je nach Grad der Parallelausrichtung mit einem Druck von etwa 0,1 bar bis etwa 1 bar in Richtung der Dicke (4) aneinander gedrückt werden.

6. Bauelement nach einem der vorhergehenden Ansprüche, **dadurch gekennzeichnet, dass** zur Verklebung (6) eine Sorelbindung und/oder eine Zementbindung vorhanden ist, wobei das Gewichtsverhältnis von Kleber (6) zu den stabförmigen Typha-Blattpartikeln (5) im Bereich von 0,5 bis 1,5 liegt.

7. Bauelement nach einem der vorhergehenden Ansprüche, **dadurch gekennzeichnet, dass** die Länge der stabförmigen Typha-Blattpartikel (5) in Abhängigkeit von der gewünschten Form des Bauelements (1) und/oder der Ausrichtung der stabförmigen Typha-Blattpartikel (5) und/oder der geplanten Anwendung des Bauelements (1) gewählt ist.

8. Bauelement nach einem der vorhergehenden Ansprüche, **dadurch gekennzeichnet, dass** überwiegend auf die im Wesentlichen gleiche Länge geschnittene stabförmigen Typha-Blattpartikel (5) vorhanden sind.

9. Bauelement nach einem der vorhergehenden Ansprüche, **dadurch gekennzeichnet, dass** an mindestens einer Seite des Bauelements (1) eine Deckschicht angebracht ist.

10. Bauelement nach einem der vorhergehenden Ansprüche, **dadurch gekennzeichnet, dass** in einer ersten Schicht des Bauelements (1) die stabförmigen Typha-Blattpartikel (5) in einer ersten Richtung (2) senkrecht zur Dicke (4) des Bauelements (1) ausgerichtet sind und in mindestens einer weiteren Schicht in einer von der ersten Richtung (2) abweichenden Richtung (3) senkrecht zur Dicke (4) des Bauelements (1) ausgerichtet sind.

## Claims

1. A load-bearing and heat-insulating structural element (1) having a thickness (4) and a planar extension (2, 3) composed of rod-shaped Typha leaf particles (5), wherein the rod-shaped Typha leaf particles (5) are oriented perpendicularly to the thickness (4) of the structural element (1) and are joined to each other by way of bonding (6), preferably by way of mineral bonding (6) using no substantial non-mineral additives, such that no cover layers are required to stabilize the structural element, **characterized in that** longitudinally cut Typha leaves yield the rod-shaped Typha leaf particles (5).

2. The structural element according to claim 1, **characterized in that** at least one direction (2, 3) of the planar extension is straight.

3. The structural element according to either claim1 or 2, **characterized in that** the rod-shaped Typha leaf particles (5) are oriented parallel.

4. The structural element according to one of the preceding claims, **characterized in that** the rod-shaped Typha leaf particles (5) during production are pressed against each other in the direction of the thickness dimension (4) using a pressure, the pressure being selected so that bonding (6) of the rod-shaped Typha leaf particles (5) across as much of the surface as possible is ensured, and undesired free air spaces between the rod-shaped Typha leaf particles (5) are avoided, and at the same time the sponge tissue and/or supporting tissue of the rod-shaped Typha leaf particles (5) is substantially preserved.

5. The structural element according to one of the preceding claims, **characterized in that,** during production, the rod-shaped Typha leaf particles (5) are pressed against each other using a pressure of approximately 0.1 bar to approximately 1 bar in the direction of the thickness (4), depending on the degree of parallel orientation.

6. The structural element according to one of the preceding claims, **characterized in that** for bonding (6) a Sorel bond and/or a cement bond is present, the weight ratio of adhesive (6) to the rod-shaped Typha leaf particles (5) being in the range from 0.5 to 1.5.

7. The structural element according to one of the preceding claims, **characterized in that** the length of the rod-shaped Typha leaf particles (5) is selected as a function of the desired shape of the structural element (1) and/or the orientation of the rod-shaped Typha leaf particles (5) and/or the planned use of the structural element (1).

8. The structural element according to one of the preceding claims, **characterized in that** rod-shaped Typha leaf particles (5) cut to substantially the same length are predominantly present.

9. The structural element according to one of the preceding claims, **characterized in that** a cover layer is applied to at least one side of the structural element (1).

10. The structural element according to one of the preceding claims, **characterized in that** the rod-shaped Typha leaf particles (5) are oriented in a first direction (2) perpendicularly to the thickness (4) of the structural element (1) in a first layer of the structural element (1), and they are oriented in a direction (3) deviating from the first direction (2) perpendicularly to the thickness dimension (4) of the structural element (1) in at least one further layer.

## Revendications

1. Composant (1) résistant à une charge et thermo-isolant qui présente une épaisseur (4) et une extension sensiblement bidimensionnelle (2, 3) et qui est réalisé à partir de particules de feuille de Typha (5) en forme de tige, les particules de feuille de Typha (5) en forme de tige étant orientées perpendiculairement à l'épaisseur (4) du composant (1) et étant reliées l'une à l'autre par collage (6), de préférence par collage minéral (6) sans additifs non minéraux significatifs de sorte qu'aucune couche extérieure ne soit nécessaire pour stabiliser le composant, **caractérisé en ce que** des feuilles de Typha coupées longitudinalement donnent les particules de feuille de Typha (5) en forme de tige.

2. Composant selon la revendication 1, **caractérisé en ce qu'**au moins une direction (2, 3) de l'extension sensiblement bidimensionnelle est rectiligne.

3. Composant selon l'une des revendications 1 et 2, **caractérisé en ce que** les particules de feuille de Typha (5) en forme de tige sont orientées parallèlement.

4. Composant selon l'une des revendications précédentes, **caractérisé en ce que**, lors de la fabrication, les particules de feuille de Typha (5) en forme de tige sont pressées les unes contre les autres avec une pression exercée dans la direction de l'épaisseur (4), la pression étant choisie de manière à assurer le collage (6) aussi complet que possible des particules de feuille de Typha (5) en forme de tige et de manière à éviter des espaces vides indésirables entre les particules de feuille de Typha (5) en forme de tige, et en même temps le tissu éponge et/ou le tissu de support des particules de feuille de Typha (5) en forme de tige étant sensiblement maintenus.

5. Composant selon l'une des revendications précédentes, **caractérisé en ce que**, dans la fabrication, les particules de feuille de Typha (5) en forme de tige sont pressées les unes contre les autres avec une pression d'environ 0,1 bar à environ 1 bar dans la direction de l'épaisseur (4) selon le degré d'orientation parallèle.

6. Composant selon l'une des revendications précédentes, **caractérisé en ce qu'**une liaison Sorel et/ou une liaison par ciment est présente pour le collage (6), le rapport en poids de l'adhésif (6) aux particules de feuille de Typha (5) en forme de tige est dans la gamme allant de 0,5 à 1,5.

7. Composant selon l'une des revendications précédentes, **caractérisé en ce que** la longueur des particules de feuille de Typha (5) en forme de tige est choisie en fonction de la forme souhaitée du composant (1) et/ou de l'orientation des particules de feuille de Typha (5) en forme de tige et/ou de l'application prévue du dispositif (1).

8. Composant selon l'une des revendications précédentes, **caractérisé en ce que** des particules de feuille de Typha (5) en forme de tige sont prévues qui sont sensiblement coupées à la même longueur.

9. Composant selon l'une des revendications précédentes, **caractérisé en ce qu'**une couche supérieure est appliquée sur au moins un côté du composant (1).

10. Composant selon l'une des revendications précédentes, **caractérisé en ce que**, dans une première couche du composant (1), les particules de feuille de Typha (5) en forme de tige sont orientées dans une première direction (2) perpendiculaire à l'épaisseur (4) du composant (1) et, dans au moins une autre couche, elles sont orientées dans une direction (3) différente de la première direction (2) et perpendiculaire à l'épaisseur (4) du composant (1).
